# EUROPEAN PATENT APPLICATION

(11) **EP 4 826 838 A1**
(43) Date of publication of application: **21.10.2026**
(21) Application number: 24904252.4
(22) Date of filing: 10.12.2024
(51) Int. Cl.: H01M 10/54, C01D 15/00, C22B 3/04, C22B 1/02, C22B 5/02

(54) **VALUABLE METAL RECOVERY COMPOSITION AND METHOD OF RECOVERING VALUABLE METAL**

(30) Priority: 15.12.2023 KR 20230183128
(71) Applicant: POSCO Holdings Inc., Pohang-si, Gyeongsangbuk-do 37859 (KR)
(72) Inventor: PARK, Chonglyuck, Pohang-si, Gyeongsangbuk-do 37859 (KR); PARK, Joongkil, Pohang-si, Gyeongsangbuk-do 37859 (KR); KIM, Wanyi, Pohang-si, Gyeongsangbuk-do 37859 (KR); HAN, Sangwoo, Pohang-si, Gyeongsangbuk-do 37859 (KR); LEE, Juseung, Pohang-si, Gyeongsangbuk-do 37859 (KR); PARK, Junyong, Pohang-si, Gyeongsangbuk-do 37859 (KR)
(74) Representative: Zacco Sweden AB
(86) International application number: PCT/KR2024/020216
(87) International publication number: WO 2025/127687

(57) **Abstract**

The present invention relates to a valuable-metal recovery composition and a method for recovering valuable metals. The valuable-metal recovery composition includes a valuable-metal recovery alloy including a carbon layer, and a lithium compound, wherein the carbon layer is disposed on at least a part of at least one of a surface and an inside of the valuable-metal recovery alloy, and the content of carbon (C) in the carbon layer is 60 wt% or more based on 100 wt% of the carbon layer.

## Description

### [TECHNICAL FIELD]

The present invention relates to waste batteries, and more particularly, to a valuable-metal recovery composition recovered from waste batteries and a method for recovering valuable metals.

### [BACKGROUND ART]

As demand for electric vehicles has been increasing worldwide, the issue of treating waste batteries generated from the electric vehicles has emerged as a social issue. In the case of lithium secondary batteries, which are main raw materials of the waste batteries, organic solvents, explosive materials, and heavy metal materials such as Ni, Co, Mn, and Fe are contained. However, since Ni, Co, Mn, and Li have high scarcity value as valuable metals, recovery and recycling processes after disposal of lithium secondary batteries have emerged as important research fields.

Specifically, a lithium secondary battery mainly includes copper and aluminum used as current collectors, Li-, Ni-, Co-, and Mn-containing oxides constituting a positive electrode material, and graphite used as a negative electrode material, and includes a separator separating the positive electrode material and the negative electrode material and an electrolyte solution injected into the separator. As a solvent and a salt constituting the electrolyte solution, carbonate organic materials such as ethylene carbonate and propylene carbonate are mainly mixed and used, and, for example, LiPF₆ is used.

As described above, a lithium secondary battery is composed of heavy metal materials such as Ni-Co-Mn-Fe, carbon, and other electrolyte materials, and among these, Ni, Co, Mn, and Li have value as valuable metals.

Recycling for the purpose of recovering battery raw materials may generally recover valuable metals through disassembly, discharge, crushing, heat treatment, recovery, and a wet process of a battery. In the case of the discharge, brine discharge is performed, and at this time, materials such as Na, K, Mg, Ca, and Cl introduced thereby are included as impurities in recovered raw materials.

After heat treatment, products formed in the recovered material vary depending on heat treatment temperature. When heat treatment is performed at a temperature of 600°C or less, the recovered material is called black powder, and is in a powder form in which oxides of Ni-Co-Mn-Li and carbon of a negative electrode material are mixed, and Al and Cu may be included in very small amounts because they are removed in advance.

When the black powder is heat-treated at a high temperature of 1,000°C or higher, metal oxides are reduced by the carbon of the negative electrode material and alloyed, whereby a black alloy containing such alloy components, carbon, and other materials is obtained. From the black alloy thus obtained, materials such as a valuable-metal alloy, lithium oxide, and graphite can be recovered by material type. At this time, the valuable-metal alloy in a metal form is coated with lithium aluminate or lithium oxide, and the black alloys are finally made into raw materials through an additional process such as leaching.

At this time, the carbon content and carbon shape in the recovered valuable-metal alloy vary depending on the size of the valuable-metal alloy, and efficiency of a hydrometallurgical process using an acid or a base can be improved, and process costs can be reduced.

### [DETAILED DESCRIPTION OF THE INVENTION]

### [Technical Problem]

A technical problem to be solved by the present invention is to provide a valuable-metal recovery composition capable of improving process efficiency and reducing process costs when a valuable-metal alloy raw material obtained from a waste battery is introduced into and used in a hydrometallurgical process using an acid or a base.

Another technical problem to be solved by the present invention is to provide a method for recovering valuable metals, which prepares a valuable-metal recovery composition having the above-described advantages.

### [Technical Solution]

A valuable-metal recovery composition according to an embodiment of the present invention includes a valuable-metal recovery alloy including a carbon layer and a lithium compound, wherein the carbon layer is disposed on at least a part of at least one of a surface and an inside of the valuable-metal recovery alloy, and the content of carbon (C) in the carbon layer may be 60 wt% or more based on 100 wt% of the carbon layer.

In an embodiment, at least a part of the lithium compound may be bound to at least a part of the surface of the valuable-metal recovery alloy. In an embodiment, the carbon layer may be disposed on the surface of the valuable-metal recovery alloy, and the total content of Ni, Co, and Mn in the carbon layer may be 50 wt% or less based on 100 wt% of the carbon layer. In an embodiment, the carbon layer may be disposed inside the valuable-metal recovery alloy, and the carbon layer may be disposed as a band-shaped carburized layer on a cross-section of the valuable-metal recovery alloy.

In an embodiment, the band-shaped carburized layer may have a ratio of a major axis to a minor axis of 2 or more. In an embodiment, the lithium compound may include a lithium oxide. In an embodiment, the lithium oxide may include a lithium aluminum oxide. In an embodiment, the valuable metal may include at least one of lithium (Li), cobalt (Co), nickel (Ni), aluminum (Al), and manganese (Mn).

A method for recovering valuable metals according to another embodiment of the present invention may include preparing a cell-unit battery or battery crushed material, dry heat-treating the battery or the crushed material in a temperature range of 1,100°C to 1,800°C without performing a melting step of the battery or the crushed material, and cooling the dry heat-treated product at a cooling rate of 10°C/min to 50°C/min or less.

In an embodiment, the high-temperature reduction reaction step may be performed in an atmosphere having an oxygen content of 5% or less. In an embodiment, the method may include separating the product subjected to the cooling step by at least one of particle size separation and magnetic separation.

In an embodiment, the step of separating the product subjected to the cooling step by at least one of particle size separation and magnetic separation may include performing magnetic separation first and then performing particle size separation. In an embodiment, in the product obtained from the step of dry heat-treating the crushed material, a lithium compound bound to a part of the surface of the valuable-metal recovery alloy may be separated by external force. In an embodiment, the step of preparing the cell-unit battery or the battery crushed material may include pretreating the cell-unit battery or the battery crushed material.

### [Advantageous Effects]

Since the valuable-metal recovery composition according to an embodiment of the present invention includes a carbon layer in a valuable-metal alloy, alloy particles are easily pulverized by external force in a subsequent hydrometallurgical process, whereby a diameter of the alloy decreases and a specific surface area increases at the same time, thereby improving reactivity to sulfuric acid leaching. In addition, since the carbon layer is disposed on a surface or inside of the valuable-metal alloy, there is an advantage in that lithium can be easily selectively leached from lithium oxide on the alloy surface.

The method for recovering valuable metals according to another embodiment of the present invention may provide a method for preparing a valuable-metal recovery composition having the above-described advantages by controlling heat treatment and cooling conditions.

### [BRIEF DESCRIPTION OF THE DRAWINGS]

FIG. 1 is an SEM photograph of a unit valuable-metal recovery composition constituting a valuable-metal recovery composition according to an embodiment of the present invention.
FIG. 2 is a flowchart of a battery treatment method according to an embodiment of the present invention.
FIGS. 3 and 4 show SEM photographs of a valuable-metal alloy of the present invention.
FIG. 5 shows an SEM photograph of a cross-section of a valuable-metal alloy of the present invention.
FIGS. 6 to 8 show EPMA analysis results according to Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

In addition, unless otherwise specifically stated, % in the present specification means wt%.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereby, and the present invention is only defined by the scope of the claims to be described below.

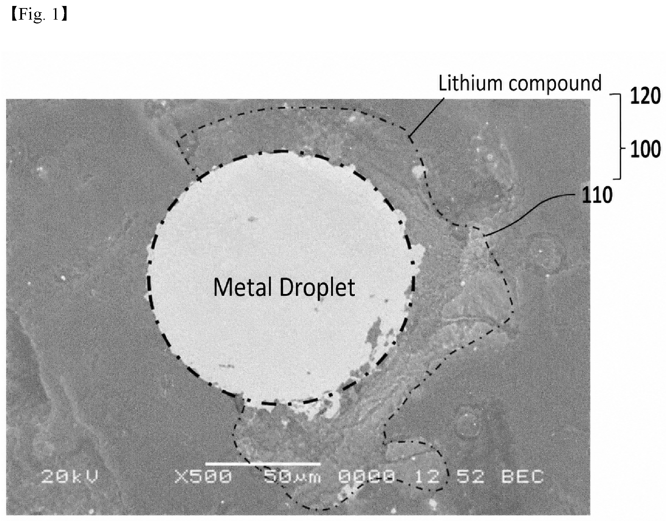

FIG. 1 is an SEM photograph of a unit valuable-metal recovery composition constituting a valuable-metal recovery composition according to an embodiment of the present invention.

Referring to FIG. 1, a valuable-metal recovery composition 100 may include a core portion 110 including valuable metals and a shell portion 120 disposed on at least a part of the core portion 110. Specifically, the unit valuable-metal recovery composition 100 may be composed of a metal such as a valuable metal, for example, Ni, Co, or Mn, in the core portion 110, and an oxide including lithium may be bound and disposed on the core portion 110.

The core portion 110 includes a valuable-metal recovery alloy, and the valuable-metal recovery alloy may include, based on 100 wt% of the total composition of the alloy, 45 wt% or more of valuable metals and the balance of impurities. The valuable-metal recovery alloy may include at least one of valuable metals such as nickel (Ni), cobalt (Co), manganese (Mn), lithium (Li), carbon (C), aluminum (Al), and copper (Cu), and the balance of impurities. In the present specification, a valuable metal may mean an expensive metal component contained in a battery, and may mean nickel, cobalt, manganese, aluminum, copper, and lithium. In an embodiment, the valuable metals may be 70 wt% or more.

In an embodiment, lithium (Li) among the valuable metals may be included in a range of 0.01 wt% to 5 wt%. When the lithium satisfies the above range, there is an advantage of maximizing Li recovery rate in a Li smelting process. When the upper limit of the above range is exceeded, there is a problem of a reduced Ni and Co recovery rate. When the lower limit of the above range is not satisfied, there is a problem in that the Li recovery rate in the Li smelting process decreases, increasing process costs.

In an embodiment, the valuable-metal recovery alloy may include copper (Cu) in an amount of 0.02 wt% or more. Specifically, the valuable-metal recovery alloy may include copper in a range of 0.1 wt% to 15 wt%. When the copper content exceeds the upper limit of the above range, there is a problem of process costs due to an increase in CuSO₄ precipitation during leaching and solvent extraction. When the copper content is below the lower limit of the above range, there is a problem in that it is difficult to generate low-melting-point Ni-Co-Mn, increasing the amount of unreacted materials.

In an embodiment, the copper may be combined with nickel (Ni) among the valuable metals to form an alloy. In an embodiment, the nickel may be included in a range of 5 wt% to 40 wt%. When the nickel exceeds the upper limit of the above range, there is a problem of a reduced leaching rate due to generation of nickel carbide (Ni₃C). When the nickel is below the lower limit of the above range, there is a problem of a reduced Ni recovery rate during leaching and solvent extraction.

In an embodiment, the valuable-metal recovery alloy may include carbon (C) in a range of 0.1 wt% to 10 wt%. When the carbon satisfies the above range, actual yield can be increased and treatment time in a wet process can be reduced. Specifically, the carbon may be included in a range of 1 wt% to 7 wt%.

When the upper limit of the above range is exceeded, the negative electrode material remains unreacted, alloying is not properly performed, and valuable metal oxides remain in the positive electrode material. When the lower limit of the above range is not satisfied, loss of lithium due to a high temperature may occur.

In an embodiment, the valuable-metal recovery alloy may include aluminum (Al) in a range of 0.25 wt% to 30 wt%. When the aluminum content exceeds the upper limit of the above range, there is a problem of a reduced Ni and Co recovery rate during leaching and solvent extraction processes. When the aluminum content is below the lower limit of the above range, LiAlO₂ is difficult to generate, and thus there is a problem of a reduced Li recovery rate.

In an embodiment, the valuable-metal recovery alloy may include a carbon layer in at least a partial region. Specifically, the carbon layer may be disposed on a surface or inside of the valuable-metal recovery alloy. The carbon layer may be formed in a process in which carbon of graphite contained in a negative electrode material in a waste battery is carburized into the valuable-metal alloy.

Since the valuable-metal recovery alloy includes the carbon layer, in a subsequent hydrometallurgical process, alloy particles are easily pulverized by external force, and accordingly, the diameter decreases and the specific surface area increases, thereby improving reactivity to sulfuric acid leaching. In addition, since the valuable-metal alloy includes the carbon layer, when lithium of lithium oxide on the alloy surface is pre-leached, there is an advantage in that selective leaching is easy.

In an embodiment, the content of carbon (C) in the carbon layer may be 60 wt% or more based on 100 wt% of the carbon layer. Specifically, the content of carbon may be 60 wt% to 98 wt%, specifically 70 wt% to 95 wt%, and more specifically 75 wt% to 94 wt%.

When the content of carbon in the carbon layer satisfies the above-described range, valuable-metal alloy particles are easily pulverized by external force during hydrometallurgical smelting in a subsequent process, so that the diameter decreases and the specific surface area increases, thereby improving reactivity to sulfuric acid leaching, and there is an advantage in that pre-leaching of lithium is easy.

In an embodiment, the carbon layer may be disposed inside the valuable-metal recovery alloy. Specifically, when a cross-section of the valuable-metal recovery alloy is observed, the carbon layer may be disposed as a band-shaped carburized layer on the cross-section of the valuable-metal recovery alloy. The band-shaped carburized layer may be formed by carbon being precipitated at grain boundaries of alloy particles.

Specifically, when the positive electrode material oxide is heated to a high temperature under reducing atmosphere conditions in a state in which carbon, which is graphite used as a reducing material, is excessive, the carburized layer is generated through a reaction in which carbon is carburized on the surface of the positive electrode material and combines with oxygen to be reduced to CO and CO₂. At this time, as the temperature increases, the amount of carbon carburized into the positive electrode material increases. This is because, as the reduction temperature increases, solubility of carbon that can be dissolved into the positive electrode material increases, thereby increasing the amount of carburization. At this time, as carbon is carburized, the melting point decreases. After carbon is saturated, even if the temperature further increases, the melting point no longer decreases. Since the saturated carbon has a reduced saturation solubility again during cooling, the saturated carbon starts to be precipitated on the particle surface, and the carbon thus precipitated on the particle surface exists in a band shape at grain boundaries of the alloy particles. At this time, when the cooling rate is slow, most of the component of the carbon layer is precipitated as carbon at grain boundaries. When the cooling rate is very fast, the reduced positive electrode material and carbon become a solid solution or are precipitated in a dot shape inside the particles.

In an embodiment, the band-shaped carburized layer may have a ratio of a major axis to a minor axis of 2 or more. Specifically, the ratio may be 10 or more. Specifically, the minor axis of the band-shaped carburized layer means the thickness of the carburized layer, and the major axis of the band-shaped carburized layer means a grain boundary of the positive electrode material alloy. When the ratio is less than 2 to 10, if a dot-shaped carburized layer is generated due to a slow cooling rate, the effect intended by the present invention cannot be obtained.

When the band-shaped carburized layer satisfies the above-described ratio, there is an advantage of facilitating penetration of carbon into the alloy and improving reactivity to sulfuric acid leaching in a subsequent hydrometallurgical process. When the ratio of the major axis to the minor axis of the band-shaped carburized layer is outside the above-described range, there is a problem in that the above-described effect is not expressed.

In an embodiment, in the valuable-metal recovery composition 10, unlike Ni, Co, and Mn, lithium in the valuable-metal recovery composition 10 may not be reduced to form an alloy, and may combine with Al components in the battery to form lithium oxide.

In an embodiment, the valuable-metal recovery composition 10 may include the shell portion 120 disposed on the core portion 110. The shell portion 120 may be a lithium oxide disposed on the core portion 110.

The lithium oxide may include, for example, a lithium-aluminum oxide. The lithium-aluminum oxide may be a lithium-aluminum compound. In the lithium-aluminum oxide, lithium and aluminum contained in the composition may be physically or chemically bonded to each other and bonded as an oxide.

In an embodiment, the lithium oxide may include LiAlO₂, Li₅AlO₄, Li₂CO₃, and LiF. The LiAlO₂, Li₅AlO₄, and Li₂CO₃ correspond to lithium oxides reacted during a high-temperature reduction reaction process of the battery crushed material, and LiF may be a lithium oxide detected due to a residual amount of electrolyte depending on the degree of pretreatment.

In an embodiment, the lithium compound may include, as XRD peaks, at least one of 2θ of 20.5° to 21.5°, 29.0° to 29.5°, 31.5° to 32.0°, 32.2° to 33.0°, 60.5° to 61.5°, 70.0° to 72.0°, 19.5° to 20.2°, 21.6° to 22.2°, 24.0° to 26.0°, 27.0° to 29.0°, 34.0° to 36.0°, 37.0° to 39.0°, 38.2° to 39.5°, 44.0° to 46.0°, 64.5° to 66.5°, and 77.77° to 79.77°.

In an embodiment, LiAlO₂ may include, as XRD peaks, at least one of 20.5° to 21.5°, 29.0° to 29.5°, 31.5° to 32.0°, 32.2° to 33.0°, 60.5° to 61.5°, and 70.0° to 72.0°. Li₅AlO₄ may include, as XRD peaks, at least one of 19.5° to 20.2° and 21.6° to 22.2°.

The Li₂CO₃ composition may include, as XRD peaks, at least one of 24.0° to 26.0°, 27.0° to 29.0°, 34.0° to 36.0°, and 37.0° to 39.0°. The LiF composition may include, as XRD peaks, at least one of 38.2° to 39.5°, 44.0° to 46.0°, 64.5° to 66.5°, and 77.77° to 79.77°.

As described above, it can be confirmed that the valuable-metal recovery composition 10 has an XRD peak value of at least one of LiAlO₂, Li₅AlO₄, Li₂CO₃, and LiF, and that a lithium compound is attached and disposed on the core portion including valuable metals.

In an embodiment, the lithium compound partially bound to the surface of the valuable-metal recovery alloy may be separated using a wet process. In another embodiment, the lithium compound may be separated from the valuable-metal recovery alloy by mechanical or physical external force. As described above, since not only the valuable-metal recovery alloy can be recovered from the valuable-metal recovery composition 10, but also the lithium compound can be separated at the same time, the lithium recovery rate is high and the amount of lost lithium can be reduced.

In an embodiment, the valuable-metal recovery composition 10 may include a carbon-based material. The carbon-based material may be, for example, a carbon (C) element. The content of carbon may be in a range of 1% to 7%. When the carbon content satisfies the above range, there is an advantage in optimizing wet treatment of the valuable-metal recovery composition.

When the carbon content exceeds the upper limit of the above range, there is a problem of a reduced leaching rate due to generation of nickel carbide (Ni₃C). When the carbon content is below the lower limit of the above range, the contents of other impurities such as Si increase, resulting in a problem of a reduced recovery rate of valuable metals such as Ni and Co in solvent extraction after a leaching process.

In an embodiment, the valuable-metal recovery composition 10 may include aluminum (Al) in an amount of 10 wt% to 30 wt%. When the aluminum content satisfies the above range, a lithium compound can be formed through physical or chemical bonding with lithium, and as the lithium compound is subsequently separated, there is an advantage of increasing the yield of lithium.

When the aluminum content exceeds the upper limit of the above range, excessive generation of Al₂(SO₄)₃ in leaching and solvent extraction processes causes problems of increased costs of Ni and Co solvent extraction and crystallization processes and reduced Ni and Co recovery rates. When the aluminum content is below the lower limit of the above range, there is a problem in that generation of Li-Al-O oxide is inferior due to insufficient aluminum content.

In an embodiment, the unit valuable-metal recovery composition 100 includes aluminum (Al), and aluminum (Al) may have a concentration gradient gradually increasing from an interface between the core portion 110 and the shell portion 120 toward the shell portion 120. The concentration gradient of aluminum (Al) increases toward the shell portion 120 because an oxide including aluminum is attached on the core portion 110 including the valuable-metal alloy.

A method for recovering valuable metals according to another embodiment of the present invention may include preparing battery crushed material, dry heat-treating the crushed material, and cooling the dry heat-treated product. The method is a method for preparing an alloy having a high concentration content of a valuable-metal recovery alloy, and particularly, may be a method for preparing an alloy having a higher concentration content of valuable metals than black powder that has undergone an initial crushing step. In addition, in the case of the valuable-metal recovery composition and valuable-metal recovery alloy prepared through the preparation method, the description is the same as that described above with reference to FIG. 1, within a range not inconsistent therewith.

The step of preparing battery crushed material is a step of preparing a material serving as a base material of the battery crushed material by crushing, or preparing a material that has already been crushed. The base material of the battery crushed material may include a spent battery, scraps constituting the waste battery, a jelly roll, a positive electrode material such as a slurry, defective products generated in a manufacturing process, residues in the manufacturing process, and waste batteries such as generated debris, for example, waste materials in a manufacturing process of a lithium-ion battery. The material itself that has already been crushed may be, for example, a product itself that has already been crushed, such as black powder.

In an embodiment, when the step of preparing the cell-unit battery or the battery crushed material includes preparing the material serving as the base material of the battery crushed material by crushing, the step may further include crushing the material serving as the base material of the battery crushed material. The base material of the battery crushed material may be crushed using a crusher to obtain a crushed product. The crushing may include, as a non-limiting example, breaking the waste battery by applying physical or mechanical force and grinding the waste battery into powder. In the crushing step, among components included in the waste battery, some large impurities such as aluminum (Al), copper (Cu), iron (Fe), and plastics can be separated. A state in which the large impurities are separated is referred to as black powder, and battery crushed material such as black powder can be prepared through the crushing step.

In an embodiment, the battery crushed material is for recovering valuable metals from a waste battery, and may have a layered structure including a separator having a positive electrode or a negative electrode laminated on at least one surface thereof. Specifically, the layered structure may include a configuration in which a positive electrode or a negative electrode is included on one surface or both surfaces of the separator based on the separator. More specifically, the number of layers of the layered structure may correspond to the number of separators.

The layered structure includes, for example, any one of positive electrode-separator-negative electrode, positive electrode-separator, separator-positive electrode, separator-negative electrode, and negative electrode-separator. For example, positive electrode-separator-negative electrode-separator-positive electrode-separator-negative electrode may have a three-layer layered structure. Specifically, the battery crushed material may have a predetermined thickness in a thickness direction as at least one or more layered structures are laminated.

In an embodiment, the battery crushed material may satisfy the following Condition 1.

<Condition 1> The layered structure may be a laminated structure of 1 layer or more to 7 layers or less.

The battery crushed material may have a layered structure having a laminated structure of 1 layer or more to 7 layers or less. Specifically, the layered structure may be a laminated structure of 1 layer or more to 5 layers or less.

As the layered structure is laminated within the above range, an increase in temperature of the crushed material can be minimized, and a temperature increase time may be appropriately required. When the layered structure is laminated thicker than the upper limit of the above range, the temperature increase excessively increases, and the temperature increase time also increases, causing combustion and fire.

In an embodiment, the battery crushed material may satisfy the following Condition 2.

<Condition 2> The size of the battery crushed material may be 100 mm or less based on a long axis, which is the longest axis among width, length, and height directions.

In an embodiment, the battery crushed material may have a size of 100 mm or less based on the long axis. Specifically, the size of the battery crushed material may be 50 mm or less. When the size of the battery crushed material is excessively large, the temperature of the battery crushed material itself rises to 100°C or higher, which causes a high possibility of fire.

In an embodiment, the battery crushed material may include aluminum (Al), manganese (Mn), lithium (Li), copper (Cu), cobalt (Co), nickel (Ni), carbon (C), and the balance of impurities. In an embodiment, the black powder may include 5 wt% to 40 wt% of nickel (Ni), 1 wt% to 20 wt% of cobalt (Co), 1 wt% to 15 wt% of manganese (Mn), 0.5 wt% to 5 wt% of lithium (Li), 10 wt% to 70 wt% of carbon (C), 0.0001 wt% to 20 wt% of aluminum (Al), and 0.0001 wt% to 20 wt% of copper (Cu), and the total amount of impurities such as iron (Fe) and phosphorus (P) may be less than 10 wt%. The components of the black powder may vary depending on the ratio of nickel, cobalt, and manganese, and the nickel, cobalt, and manganese may be controlled by positive electrode material oxides in the lithium secondary battery when the lithium secondary battery is crushed.

In an embodiment, the step of crushing the material serving as the base material of the battery crushed material may be a crushing method using at least one of shearing, compression, and tensile force. Specifically, the crushing step may be performed, for example, by at least one of a hammer mill, a ball mill, and a stirred ball mill. The hammer mill may perform at least one of disassembly, punching, and milling, and it is clear that this is a non-limiting example, and that various types of crushing or grinding devices, for example, industrial crushers, may be used for crushing.

In an embodiment, the particle diameter of the battery crushed material may have a size within 50 mm, specifically within 30 mm. If the particle diameter is larger than the above range, more energy supply is required in a heat treatment step to be described below, which causes an uneconomical problem.

In an embodiment, before the step of crushing the material serving as the base material of the battery crushed material, a pretreatment step may be further included for explosion prevention or detoxification of the base material of the battery crushed material. By including the pretreatment step, a substance having a risk of explosion, such as an electrolyte solution in the base material, is removed, and the base material such as a waste battery is subjected to discharge treatment, thereby improving safety during the crushing step and improving recovery and productivity of valuable metals.

When a battery is used as the base material of the battery crushed material, before crushing the battery crushed material, a step of freezing the battery may be included. When the battery is directly crushed, explosion and fire may occur due to an electrolyte solution contained in the battery. Specifically, as a specific pressure is applied to the battery, a separator is physically crushed, a high current is formed due to occurrence of a short circuit, a spark is generated, and the electrolyte is ignited by the spark, thereby causing fire.

In the step of freezing the battery, the battery is frozen so that ignition of a liquid electrolyte contained in the battery is suppressed, and then the crushing process is performed. Therefore, problems due to electrolyte ignition do not occur.

In an embodiment, the step of freezing the battery may be performed by cooling the battery to a range of -150°C to -60°C. When the upper limit of the temperature range is exceeded, a voltage remaining inside the battery does not decrease to 0 V, and thus a battery reaction due to a short circuit may occur, and the electrolyte is not completely frozen, which is not appropriate.

When the lower limit of the temperature range is not satisfied, the electrolyte is sufficiently frozen and the internal voltage of the battery also decreases to 0 V. Accordingly, even if a short circuit in which the positive electrode and the negative electrode directly contact each other occurs, a battery reaction does not occur, and thus the battery temperature does not increase, so that gas generation and combustion of the electrolyte do not occur. In addition, since the electrolyte is in a frozen state, mobility of lithium ions is very low, electrical conduction characteristics due to movement of lithium ions can be significantly reduced, and vaporization of the electrolyte solution does not occur, so that flammable gases such as ethylene, propylene, and hydrogen may not be generated.

In the step of freezing the battery, when the upper limit of the temperature range is exceeded, the voltage remaining inside the battery does not decrease to 0 V, and thus a battery reaction due to a short circuit may occur, and the electrolyte is not completely frozen, which is not appropriate. When the lower limit of the temperature range is not satisfied, a large amount of energy must be used for freezing, causing an uneconomical problem.

In an embodiment, the step of freezing the battery may be performed by cooling the battery in a temperature range of -60°C to -20°C under a vacuum atmosphere condition of 100 torr or less. The step of freezing the battery may be performed in the above temperature range, which is a temperature at which vaporization of the electrolyte solution can be suppressed. The vacuum atmosphere may be, for example, an inert gas, carbon dioxide, nitrogen, water, or a combination thereof.

Since the pressure is controlled to 100 torr or less and the process is performed in a vacuum atmosphere, oxygen supply is suppressed, thereby preventing the electrolyte from reacting with oxygen, preventing explosion caused thereby, suppressing vaporization of the electrolyte solution, and not generating flammable gases such as ethylene, propylene, and hydrogen.

In the step of freezing the battery, when the step is performed in an air atmosphere or performed at a pressure exceeding 100 torr, voltage may remain in the battery, and since the electrolyte is not in a frozen state in the temperature range of -60°C to -20°C, there is a problem in that the electrolyte may be vaporized and exploded by a spark generated when a short circuit occurs due to the remaining voltage.

In an embodiment, the pretreatment step may include forcibly discharging the waste battery or the battery crushed material. The step of forcibly discharging is a step of lowering the voltage of the waste battery or the battery crushed material, and can improve safety during the crushing step and improve valuable metal recovery and productivity. The step of forcibly discharging may perform, for example, brine discharge or electrical discharge.

The step of dry heat-treating the crushed material may include introducing the crushed material into a furnace capable of increasing the crushed material to a high temperature, and increasing the crushed material to a temperature equal to or higher than a melting point. The step of dry heat-treating the crushed material may involve heat treatment conditions under which a high-temperature reduction reaction is performed without a melting step.

In an embodiment, the heat treatment conditions may involve heat treatment conditions in a range of 1,100°C to 1,800°C. Specifically, the range may be 1,150°C to 1,400°C, and more specifically 1,200°C to 1,400°C. When the upper limit of the above range is exceeded, there is a problem of loss due to vaporization of lithium. When the lower limit of the above range is not satisfied, sintering and reduction of alloy elements do not proceed, causing a problem in that flakes are excessively formed. In the above temperature range, a reduction reaction can be performed in a state in which carbon in the crushed material is minimally burned and almost no carbon dioxide is generated.

In an embodiment, the step of dry heat-treating the crushed material may be performed in a gas atmosphere of at least one of an inert gas, carbon dioxide, carbon monoxide, and a hydrocarbon gas. The inert gas may include, for example, at least one of argon and nitrogen. As the reduction reaction of the crushed material is performed in the gas atmosphere, a valuable-metal recovery alloy including valuable metals contained in the crushed material as a component can be effectively recovered.

In an embodiment, a part of the gas atmosphere may include impurities including a residual amount of oxygen. When the content of oxygen among the impurities is high, carbon dioxide may be formed in combination with components of the crushed material during the reduction reaction process, and accordingly, there is a problem in that it is gasified together with lithium and difficult to recover.

In an embodiment, in the dry heat treatment step, the oxygen content may be 5% or less. Specifically, the oxygen content may be 1% or less, and more specifically 0.1% or less. Specifically, when the partial pressure of oxygen is outside the above-described range, there are problems of lithium loss in a local high-temperature state and generation of a large amount of carbon dioxide.

Specifically, in the dry heat-treating step, components such as nickel-, cobalt-, manganese-, and lithium-containing oxides in the crushed material are alloyed to form a valuable-metal recovery composition, and the valuable-metal recovery composition may include valuable metals and the balance of impurities. The valuable-metal recovery composition may include, for example, aluminum (Al), manganese (Mn), lithium (Li), copper (Cu), cobalt (Co), nickel (Ni), carbon (C), and the balance of impurities, and the detailed description thereof is the same as the valuable-metal recovery composition described above with reference to FIG. 1 within a range not inconsistent therewith.

The valuable-metal recovery composition may include a lithium compound, and the lithium compound may be prepared by the reduction reaction. In an embodiment, the aluminum content in the valuable-metal recovery composition may be 0.25 wt% to 30 wt%. As aluminum is added, there is an effect of reducing a stabilization temperature when a lithium compound, for example, lithium-alumina (LiAlO₂), is generated.

When the aluminum content exceeds the upper limit of the above range, there is a problem of a reduced Li recovery rate due to generation of a Li-Al-O oxide (LiAl₁₁O₁₇) having a high Al₂O₃ content. When the aluminum content is below the lower limit of the above range, there is a problem in that generation of a Li-Al-O oxide is inferior due to insufficient Al₂O₃ content.

In an embodiment, a stirring process may be added in the heat treatment furnace. In an embodiment, a stirring process may be added in the heat treatment furnace. The stirring process may secure promotion of a reaction and uniformity of an internal temperature in the heat treatment furnace, which is a high-temperature reduction furnace, through, for example, use of a rotating body or gas. The valuable-metal recovery composition may be recovered by a reduction reaction of black powder in the heat treatment furnace.

The cooling step of cooling the dry heat-treated product may be a step of cooling the dry heat-treated product to assist a carbon layer in being leached in the valuable-metal alloy. Specifically, the cooling step may be a step of controlling the rate and shape in which carbon carburized during reduction of the positive electrode material is precipitated along grain boundaries of particles.

In an embodiment, the cooling step of cooling the dry heat-treated product may be performed in a range of 10°C/min to 50°C/min. Specifically, the cooling step may be performed in a range of 20°C/min to 30°C/min.

As the cooling step lowers the temperature at the above-described cooling rate, there is an advantage in that precipitated carbon is stably precipitated in a band shape at grain boundaries of the positive electrode material alloy. When the cooling step is performed outside the above-described rate range, there is a problem in that carbon is precipitated in a dot shape inside particles or in a planar shape at grain boundaries based on a cross-section of particles.

In an embodiment, the method may further include separating the product subjected to the cooling step by at least one of particle size separation and magnetic separation. Specifically, the separating step may separate a product subjected to the cooling step, for example, a valuable-metal recovery composition, by at least one of particle size separation and magnetic separation. The particle size separation method separates particles according to the size or diameter of the particles, and may include, for example, various methods of separating particles using a sieve. The magnetic separation method may separate particles through contact with a magnetic body using the magnetic body, and various types of magnetic separation methods may be applied.

In an embodiment, the step of separating the product subjected to the cooling step by at least one of particle size separation and magnetic separation may be a step of separating the product by at least one of particle size separation, magnetic separation, and specific gravity separation. The specific gravity separation is a method of separating particles in consideration of a difference in specific gravity by material. For example, a specific solvent may be used to separate particles based on large and small specific gravity of particles corresponding to the specific solvent, and various types of specific gravity separation methods may be applied.

In an embodiment, the step of separating the cooled crushed material by at least one of particle size separation and magnetic separation may include all of a step of performing the particle size separation, the magnetic separation, and the particle size separation and the magnetic separation together, thereby separating a valuable-metal recovery alloy. The step of performing only the particle size separation can recover the valuable-metal recovery alloy only by particle size separation of a valuable-metal recovery composition having a particle diameter of 100 µm to 100 mm or less.

In the case of the magnetic separation, when the valuable-metal recovery composition includes a material having a particle diameter of 100 µm or less, the valuable metal can be recovered from the valuable-metal recovery composition only by the magnetic separation. In the case of the material having a particle diameter of 100 µm or less, since the particle diameter is similar to that of carbon, the recovery rate of valuable metals lost only by the particle size separation can be increased through the magnetic separation.

In an embodiment, when the particle size separation and the magnetic separation are performed together, the magnetic separation may be performed first, and then the particle size separation may be performed. By first performing the magnetic separation, loss of the valuable-metal recovery alloy from the valuable-metal recovery composition of 100 µm or less can be prevented.

In an embodiment, the step of separating the cooled crushed material by at least one of particle size separation and magnetic separation may further include separating a valuable-metal alloy from a lithium-containing lithium compound disposed on the valuable metal. The step of separating the lithium-containing lithium compound may be performed before or after the step of separating the cooled crushed material by at least one of particle size separation and magnetic separation.

The lithium compound may be, for example, a lithium-containing oxide, and may be separated by physical external force. A detailed description thereof may refer to the valuable-metal recovery composition of FIG. 1 within a range not inconsistent therewith. As described above, by separating the lithium-containing oxide by physical external force, not only valuable metals but also lithium recovery rate can be increased.

In order to describe the present invention in more detail, Examples of the present invention are described below. However, the following Examples are merely examples of the present invention, and the present invention is not limited to the following Examples.

### <Experimental Example>

### <Example 1>

### Step of Preparing Valuable-Metal Recovery Composition

A cell, module, or pack, which was an electric vehicle waste battery including a positive electrode material containing lithium ions, a graphite negative electrode material, an aluminum current collector, a separator, an electrolyte solution, and a copper current collector, was prepared. After the waste battery was frozen at -30°C or lower and then crushed, the waste battery was crushed using shredder equipment under inert gas conditions such that the longest length among the width and length of the waste battery was 100 mm or less.

After the valuable-metal recovery composition was obtained by the above-described method, the crushed battery crushed material was heat-treated at 1,300°C under an oxygen partial pressure condition of 0.5% to perform a reduction process. After the reduction process, the reduction product was cooled under a condition in which the cooling rate was 25°C/min, and then the valuable-metal recovery composition was obtained.

FIG. 1 is an SEM photograph of a composition for recovering valuable metals according to an embodiment of the present invention.

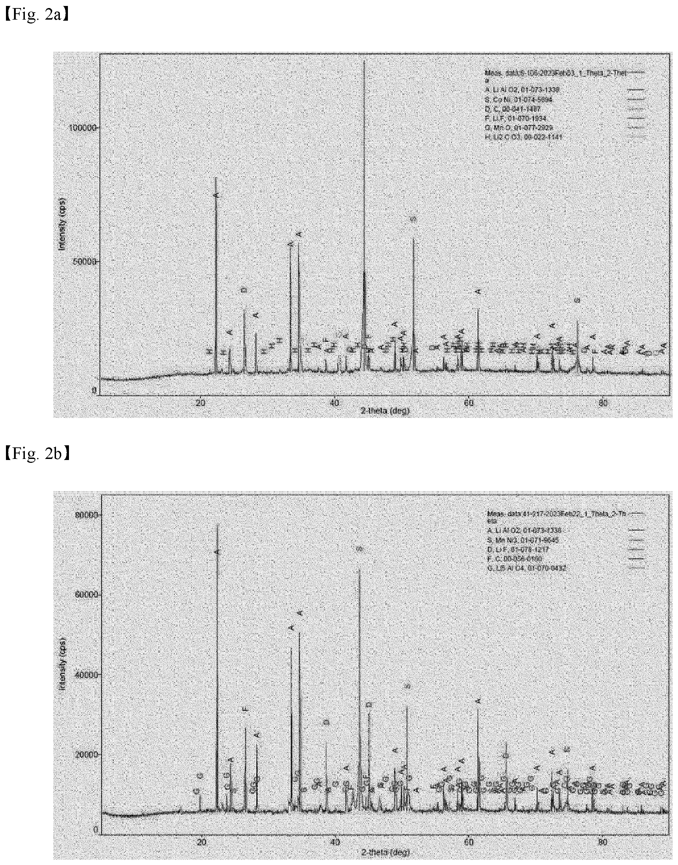

FIGS. 2a and 2b show XRD analysis results of the composition for recovering valuable metals according to an embodiment.

Referring to FIGS. 1, 2a, and 2b, it can be confirmed that, in the composition for recovering valuable metals, a lithium compound, specifically, lithium oxide, is bound and disposed on the valuable-metal recovery alloy. Such a structure may be expressed by performing the above-described reduction process.

### <Comparative Example 1> - Cooling Rate of 5°C/min or Less

A valuable-metal recovery composition was obtained under the same conditions as in Example 1, except that the cooling rate was 3°C/min.

### <Comparative Example 2> - Reduction Temperature of 1,100°C or Lower

A valuable-metal recovery composition was obtained under the same conditions as in Example 1, except that the reduction temperature was 1,100°C or lower.

### <Comparative Example 3> - Cooling Rate of 100°C/min or More

A valuable-metal recovery composition was obtained under the same conditions as in Example 1, except that, in the cooling step, the cooling temperature was 100°C/min.

### <Evaluation Example 1> - Component Contents on Alloy Surface

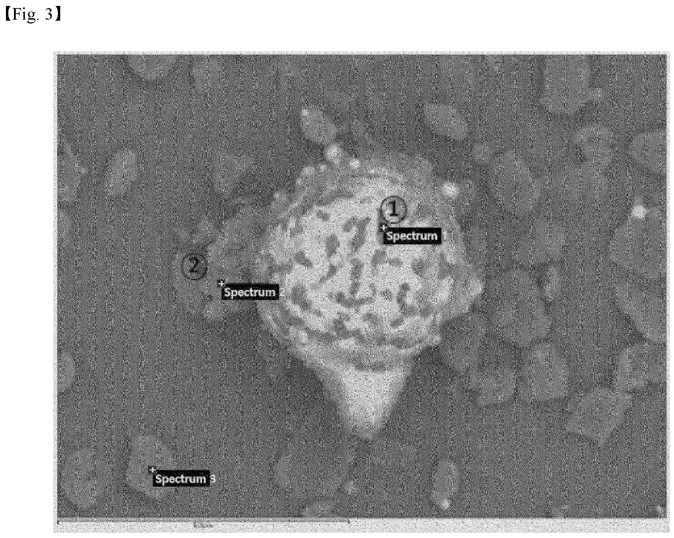

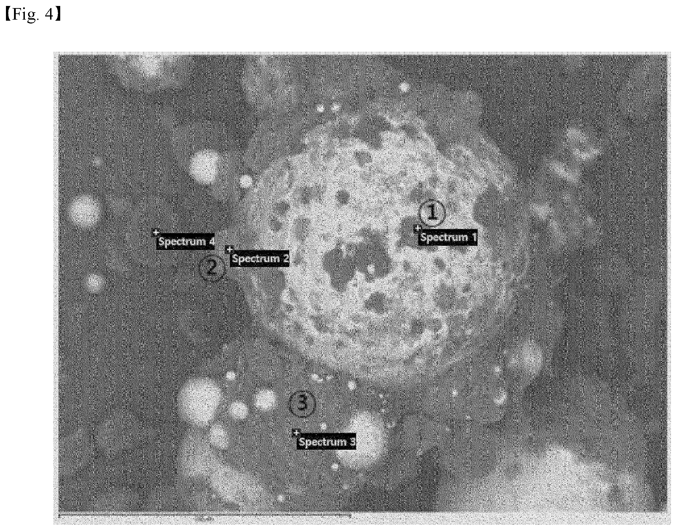

FIGS. 3 and 4 show SEM photographs of the valuable-metal alloy of the present invention.

FIGS. 3 and 4 relate to SEM photographs capable of confirming a shape in the valuable-metal alloy according to an embodiment of the present invention.

Tables 1 and 2 below show result values obtained by observing SEM images of the surfaces of the valuable-metal alloy in region 1 (Spectrum 1) and region 2 (Spectrum 2), and measuring component contents by EDAX. Region 1 and region 2 are defined as follows, and the component contents were measured by the following method.

Region 1 (Spectrum 1): a gray region in FIGS. 3 and 4, which are SEM photographs of the valuable-metal alloy, and this means a carbon layer.

Region 2 (Spectrum 2): a bright region in FIGS. 3 and 4, which are SEM photographs of the valuable-metal alloy, and this means a compound including lithium, specifically lithium aluminate (LiAlO₂).

**[Table 1]**

| | Region | C [wt%] | O [wt%] | Al [wt%] | Mn [wt%] | Fe [wt%] | Co [wt%] | Ni [wt%] | Cu [wt%] |
|---|---|---|---|---|---|---|---|---|---|
| Example 1 | Spectrum 1 | 76.43 | 2.58 | - | 3.48 | - | 3.63 | 10.16 | 3.72 |
| | Spectrum 2 | 9.45 | 55.45 | 34.59 | - | 0.24 | - | 0.26 | - |

**[Table 2]**

| | Region | C [wt%] | O [wt%] | Al [wt%] | Mn [wt%] | Co [wt%] | Ni [wt%] |
|---|---|---|---|---|---|---|---|
| Example 1 | Spectrum 1 | 92.58 | 6.35 | - | 0.41 | - | 0.67 |
| | Spectrum 2 | 24.76 | 47.03 | 25.86 | 0.57 | 0.43 | 1.35 |

Referring to FIGS. 3 and 4 and Tables 1 and 2, it can be confirmed that, in Example 1, the carbon content of region 1 is 76% to 92%. This confirms that the valuable-metal recovery alloy in the valuable-metal recovery composition prepared according to an embodiment of the present invention includes a region having a high carbon content due to graphite attached to the surface of the alloy or graphite precipitated during the cooling process. As described above, in the Comparative Examples in which the oxygen concentration in the reduction process and the cooling rate in the cooling step are not included in the ranges of the present invention, it was confirmed that the content of graphite was low and thus a carbon layer was not formed. In contrast, since Example 1 includes a carbon layer, there is an advantage in that alloy particles are easily pulverized by external force in a hydrometallurgical process, and lithium of lithium oxide can be pre-leached.

### <Evaluation Example 2> - Component Contents of Alloy Cross-Section

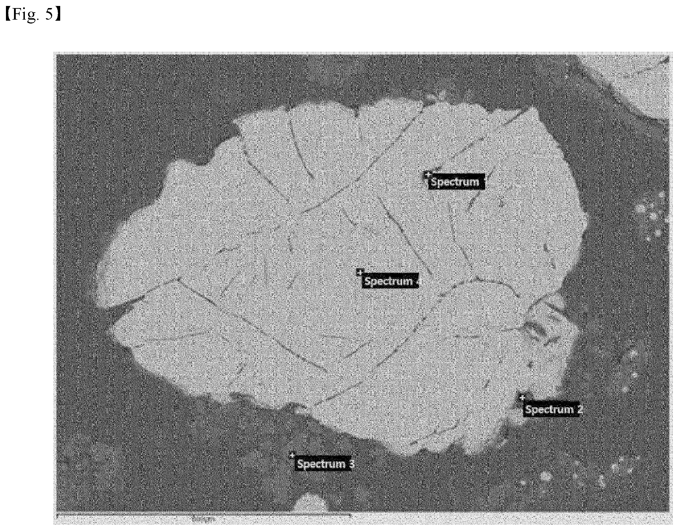

FIG. 5 shows an SEM photograph of a cross-section of the valuable-metal alloy of the present invention.

FIG. 5 shows a cross-section of the valuable-metal alloy according to an embodiment of the present invention observed by an SEM photograph, and components measured by EDAX. Specifically, region 1 (Spectrum 1) and region 2 (Spectrum 2) mean carbon, region 3 (Spectrum 3) means a lithium compound combined with Al, and region 4 (Spectrum 4) means an NCM alloy.

Table 3 below shows result values obtained by observing cross-sections of the valuable-metal alloy in region 1, region 2, region 3, and region 4 using SEM photographs and measuring component contents by EDAX.

**[Table 3]**

| | Region | C [wt%] | O [wt%] | Al [wt%] | P [wt%] | Mn [wt%] | Co [wt%] | Ni [wt%] | Cu [wt%] |
|---|---|---|---|---|---|---|---|---|---|
| Example 1 | Spectrum 1 | 87.03 | - | 0.47 | 0.88 | 2.09 | 1.48 | 8.05 | - |
| | Spectrum 2 | 94.42 | - | - | - | - | 2.06 | 3.53 | - |
| | Spectrum 3 | - | 57.70 | 42.30 | - | - | - | - | - |
| | Spectrum 4 | - | - | - | - | 17.75 | 13.62 | 61.49 | 7.14 |

Referring to Table 3, in the cross-sectional photograph of the alloy particles, the gray region distributed in a band shape inside the particles is carbon according to region 1 and region 2 precipitated at grain boundaries of the alloy particles. As in the Example, it was confirmed that carburized carbon was precipitated in a band shape because the reducing atmosphere and oxygen concentration were included in the ranges of the present invention, and the cooling rate was included in the range of the present invention. In contrast, in the Comparative Examples, particularly as in Comparative Example 1, when the cooling rate is lower than that of the Example, precipitated carbon is diffused in the cross-section of the alloy particles, so that the ratio of the major axis to the minor axis of the band-shaped carbon layer decreases and carbon remains in a dot shape in the alloy.

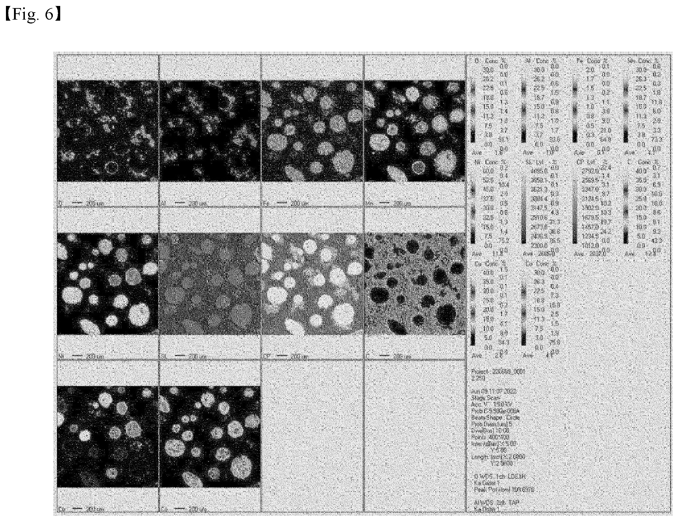

FIGS. 6 to 8 show EPMA analysis results according to Comparative Examples of the present invention.

Referring to FIG. 6, in the case of Comparative Example 1 having a slow cooling rate, it can be confirmed that sufficient time for carbon carburized at a high temperature to slowly diffuse to the particle surface is not provided, and thus the carburized layer is not observed in droplet grain boundaries in which reduced positive electrode material particles are aggregated, but is observed only on an outer surface of the droplets.

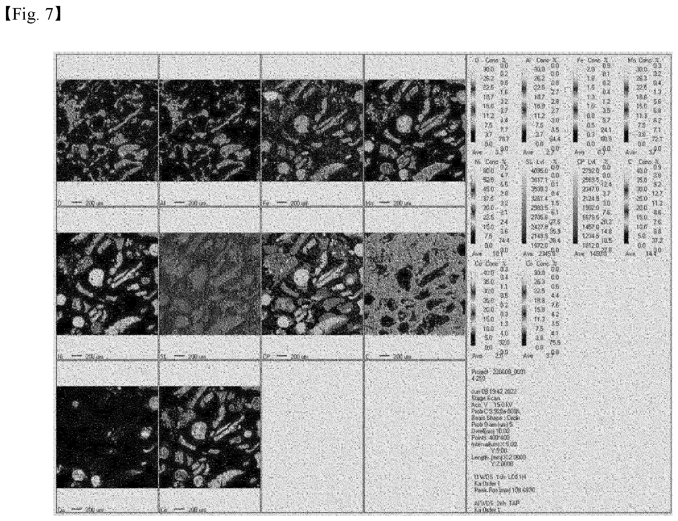

Referring to FIG. 7, in the case of Comparative Example 2 having a low reduction temperature, lithium aluminate is not coated on the surface of the positive electrode material alloy. Since the reduction temperature of the positive electrode material is low, the amount of carbon carburized into the particles is small, and thus the cooling rate does not form droplets of the reduced alloy well, and it was confirmed that the precipitated carburized layer was also precipitated in a dot shape having a short aspect ratio.

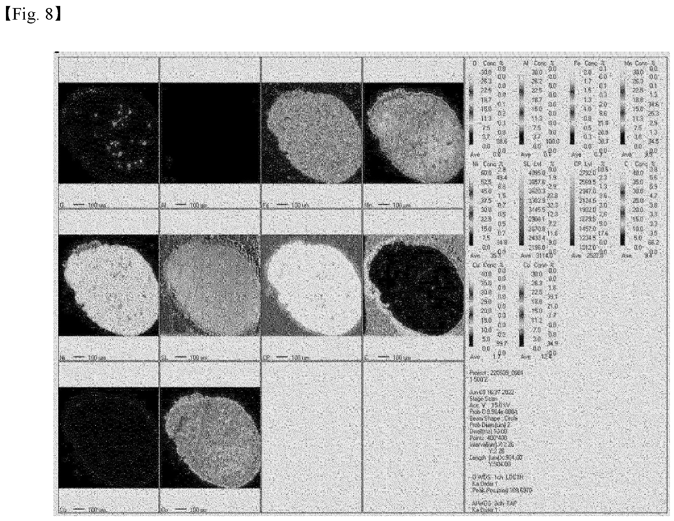

FIG. 8 shows that, as in Comparative Example 3, when the cooling rate is drastically fast, carbon carburized at a high temperature and melted inside the particles is not diffused and precipitated at grain boundaries or droplet surfaces, but is precipitated in a state of being solidsolved inside. Specifically, in the case of rapid cooling, it was confirmed that no particular tendency was observed inside the positive electrode material alloy droplets in carbon.

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A valuable-metal recovery composition comprising:
a valuable-metal recovery alloy including a carbon layer; and
a lithium compound,
wherein the carbon layer is disposed on at least a part of at least one of a surface and an inside of the valuable-metal recovery alloy, and
wherein a content of carbon (C) in the carbon layer is 60 wt% or more based on 100 wt% of the carbon layer.

2. The valuable-metal recovery composition of claim 1,
wherein at least a part of the lithium compound is bound to at least a part of the surface of the valuable-metal recovery alloy.

3. The valuable-metal recovery composition of claim 1,
wherein the carbon layer is disposed on the surface of the valuable-metal recovery alloy, and
wherein a total content of Ni, Co, and Mn in the carbon layer is 50 wt% or less based on 100 wt% of the carbon layer.

4. The valuable-metal recovery composition of claim 1,
wherein the carbon layer is disposed inside the valuable-metal recovery alloy, and
wherein the carbon layer is disposed as a band-shaped carburized layer on a cross-section of the valuable-metal recovery alloy.

5. The valuable-metal recovery composition of claim 4,
wherein the band-shaped carburized layer has a ratio of a major axis to a minor axis of 2 or more.

6. The valuable-metal recovery composition of claim 1,
wherein the lithium compound comprises a lithium oxide.

7. The valuable-metal recovery composition of claim 6,
wherein the lithium oxide comprises a lithium aluminum oxide.

8. The valuable-metal recovery composition of claim 1,
wherein the valuable metal comprises at least one of lithium (Li), cobalt (Co), nickel (Ni), aluminum (Al), and manganese (Mn).

9. A method for recovering valuable metals, comprising:
preparing a cell-unit battery or battery crushed material;
dry heat-treating the battery or the crushed material in a temperature range of 1,100°C to 1,800°C without performing a melting step of the battery or the crushed material; and
cooling the dry heat-treated product at a cooling rate of 10°C/min to 50°C/min.

10. The method for recovering valuable metals of claim 9,
wherein the high-temperature reduction reaction step is performed in an atmosphere having an oxygen content of 5% or less.

11. The method for recovering valuable metals of claim 9, further comprising:
separating the product subjected to the cooling step by at least one of particle size separation and magnetic separation.

12. The method for recovering valuable metals of claim 9,
wherein separating the product subjected to the cooling step by at least one of particle size separation and magnetic separation comprises performing magnetic separation first and then performing particle size separation.

13. The method for recovering valuable metals of claim 9,
wherein, in a product obtained from dry heat-treating the crushed material, a lithium compound bound to a part of a surface of the valuable-metal recovery alloy is separated by external force.

14. The method for recovering valuable metals of claim 9,
wherein preparing the cell-unit battery or the battery crushed material comprises pretreating the cell-unit battery or the battery crushed material.
